# EUROPÄISCHE PATENTANMELDUNG

(11) **EP 1 426 406 A1**
(43) Veröffentlichungstag der Anmeldung: **09.06.2004**
(21) Anmeldenummer: 02026875.1
(22) Anmeldetag: 02.12.2002
(51) Int. Cl.: C08K 5/3462

(54) **Monosubstituierte 6-Aminouracile zum Stabilisieren von halogenhaltigen Polymeren**

(71) Anmelder: Crompton Vinyl Additives GmbH, 68623 Lampertheim (DE)
(72) Erfinder: Wehner, Wolfgang, Dr., 64673 Zwingenberg (DE); Friedrich, Hans-Helmut, 64686 Lautertal-Gademheim (DE)
(74) Vertreter: Wibbelmann, Jobst, Dr., Dipl.-Chem.

(57) **Zusammenfassung**

Zusammensetzung enthaltend ein chlorhaltiges Polymer und mindestens eine Verbindung der Formel I 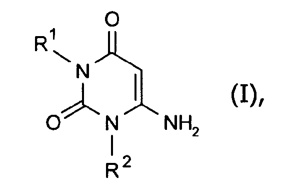 wobei
R¹ oder R² lineares oder verzweigtes C₃-C₂₂-Alkyl-, unsubstituiertes oder durch C₁-C₄-Alkyl/Alkoxy- und/oder Hydroxy substituiertes Phenyl, unsubstituiertes oder durch C₁-C₄-Alkyl/Alkoxy- und/oder Hydroxy substituiertes Phenyl-C₁-C₄-Alkyl, lineares oder verzweigtes C₃-C₁₈-Alkenyl, C₃-C₈-Cycloalkyl, durch mindestens 1 Sauerstoffatom unterbrochenes C₃-C₁₀-Alkyl oder C₃-C₁₀-Hydroxyalkyl oder Acetoxy/Benzoyloxy-C₂-C₁₀-Alkyl bedeutet, als Stabilisatoren für halogenhaltige Polymere.

## Beschreibung

Die Erfindung betrifft Zusammensetzungen bestehend aus chlorhaltigen Polymeren und Aminouracilen der unten angegebenen Formel I bzw. die Verwendung dieser Aminouracile zum Stabilisieren dieser Polymere, insbesondere PVC.

PVC kann durch eine Reihe von Zusatzstoffen stabilisiert werden. Verbindungen des Bleis, Bariums und Cadmiums sind dafür besonders gut geeignet, sind jedoch heute aus ökologischen Gründen beziehungsweise wegen ihres Schwermetallgehalts umstritten
(vgl. "Plastics Additives Handbook" H. Zweifel, Carl Hanser Verlag, 5. Aufl., 2001, Seiten 427 - 483, und "Kunststoff Handbuch PVC", Band 2/1, W. Becker/D. Braun, Carl Hanser Verlag, 2. Aufl., 1985, Seiten 531 - 538; sowie Kirk-Othmer: "Encyclopedia of Chemical Technology", 4^{th} Ed., 1994, Vol. 12, Heat Stabilizers,
S. 1071 - 1091). Man sucht daher weiter nach wirksamen Stabilisatoren und Stabilisatorkombinationen, welche frei von Blei, Barium und Cadmium sind.

Die Stabilistorwirkung von 1,3-disubstituierten Aminouracile wurde bereits in US 3,436,362, US 4,656,209, US 4,352,903, EP 967,245, EP 967,209, EP 967,208 und EP 1,044,968 beschrieben .

Es wurde nun überraschend gefunden, dass sich monosubstituierte 6-Aminouracile der allgemeinen Formel I 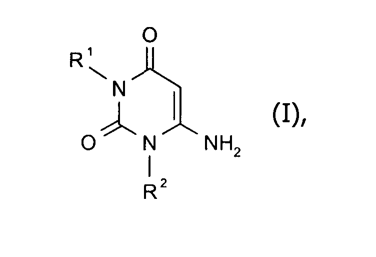 wobei R¹ oder R² lineares oder verzweigtes C₃-C₂₂-Alkyl-, unsubstituiertes oder durch C₁-C₄-Alkyl/Alkoxy- und/oder Hydroxy substituiertes Phenyl, unsubstituiertes oder durch C₁-C₄-Alkyl/Alkoxy- und/oder Hydroxy substituiertes
Phenyl-C₁-C₄-Alkyl, lineares oder verzweigtes C₃-C₁₈-Alkenyl, C₃-C₈-Cycloalkyl, durch mindestens 1 Sauerstoffatom unterbrochenes C₂-C₁₀-Alkyl, oder C₃-C₁₀-Hydroxyalkyl oder Acetoxy/Benzoyloxy-C₂-C₁₀-Alkyl bedeutet und R¹ oder R² Wasserstoff ist.
Diese Verbindungen eignen sich besonders gut für die Stabilisierung von chlorhaltigen Polymeren wie z. B. PVC. Es wird hiermit ein alternatives System auf 6-Aminouracilbasis zur Verfügung gestellt.
Für Verbindungen der Formel I gilt: C₃-C₂₂-Alkyl umfasst u.a. n-Propyl, iso-Propyl, n-Butyl, i-Butyl, sec-Butyl oder t-Butyl, Pentyl, Hexyl, Heptyl, Octyl, 2-Ethylhexyl, i-Octyl, Decyl, Nonyl, Undecyl, Dodecyl, Hexadecyl, Octadecyl, Eicosyl und Docosyl. Bevorzugt sind n-Propyl, n-Butyl, Hexyl und Octyl.
C₃-C₁₈-Alkenyl bedeutet z. B. Allyl, Methallyl,1-Butenyl, 2-Butenyl, 3-Butenyl, Isobutenyl, 1-Pentenyl, 2-Pentenyl, 3-Pentenyl, 4-Pentenyl, 1-Hexenyl, 2-Hexenyl, 3-Hexenyl, 4-Hexenyl, 5-Hexenyl als auch deren Isomere sowie Oleyl. Bevorzugt ist Allyl, Methallyl und Butenyl.
C₃-C₈-Cycloalkyl bedeutet z. B. Cyclopropyl, Cyclobutyl, Cyclopentyl, Cyclohexyl, Cycloheptyl oder Cyclooctyl, bevorzugt ist Cyclopentyl, Cyclohexyl oder Cycloheptyl, bei den unsubstituierten oder durch C₁-C₄-Alkyl/Alkoxy- und/oder Hydroxy substituierten Phenylresten, den unsubstituierten oder durch C₁-C₄-Alkyl/Alkoxy- und/oder Hydroxy substituierten Phenyl-C₁-C₄-Alkyl handelt es sich beispielsweise um Benzyl, 1- oder 2-Phenylethyl, 3-Phenylpropyl, α,α-Dimethylbenzyl oder 2-Phenylisopropyl, vorzugsweise 2-Phenethyl und Benzyl. Die Substitution am Phenylring kann durch drei, zwei oder insbesondere einem Substituenten erfolgen, wobei die Substituenten Hydroxy, Methyl, Ethyl, Propyl, Butyl, Methoxy, Ethoxy, Propoxy und Butoxy sein können.
Bevorzugt sind Tolyl, Xylol und Mesityl.
Sind die Alkylreste durch Sauerstoff unterbrochen, beinhalten sie notwendigerweise mindestens 2 C-Atome.

Hydroxyalkyl bedeuten: 2-Hydroxypropyl, 3-Hydroxypropyl, 2-Hydroxybutyl, 3-Hydroxybutyl und 4-Hydroxybutyl. Bevorzugt sind 3-Hydroxypropyl und 4-Hydroxyalkyl bedeuten 2-Hydroxypropyl, 3-Hydroxypropyl, 2-Hydroxybutyl, 3-Hydroxybutyl und 4-Hydroxybutyl. Acyliertes Hydroxyalkyl ist Acetoxy- und Benzoyloxy-C₂-C₁₀-alkyl. Bevorzugt sind Acetoxyethyl und ―propyl.
Beispiele für durch -O- unterbrochene C₃-C₁₀-Alkylreste sind verzweigte oder geradkettige Reste wie z. B. Methoxymethyl, Methoxyethyl, Methoxypropyl, Methoxybutyl, Methoxyhexyl, Methoxyoctyl, Ethoxymethyl, Ethoxyethyl, Ethoxypropyl, Ethoxybutyl, Ethoxyhexyl, Ethoxyoctyl, n-Propoxymethyl, n-Propoxyethyl, n-Propoxybutyl, n-Propoxyhexyl, i-Propoxymethyl, i-Propoxyethyl, i-Propoxybutyl,i-Propoxyhexyl, n-Butoxymethyl, n-Butoxylethyl, n-Butoxybutyl, n-Butoxyhexyl oder t-Butoxymethyl u.s.w. Bevorzugt ist beispielsweise Methoxy- oder Ethoxypropyl sowie Methoxyethyl und Ethoxyethyl.
Die Alkylkette kann auch mit mehr als einem -O- unterbrochen sein.
Beispiele hierfür sind -CH₂-O-CH₂-CH₂-O-CH₃, -CH₂-O-CH₂-CH₂-CH₂-O-CH₃, -CH₂-O-CH₂-CH₂-CH₂-CH₂-O-CH₃, -CH₂-CH₂-O-CH₂-CH₂-O-CH₂-CH₃, - CH₂-CH₂-O-CH₂-CH₂-O-CH₂-CH₂-O-CH₂-CH₃ u.s.w.
Auch hier sind Strukturisomere möglich, die gegebenenfalls noch OH-Gruppen tragen können.
Beispiele hierfür sind -CH₂-O-CH₂-CH₂-OH, -CH₂-O-CH₂-CH₂-CH₂-OH, -CH₂-O-CH₂-CH₂-CH₂-CH₂-OH, -CH₂-CH₂-O-CH₂-CH₂-O-CH₂-CH₂-OH, - CH₂-CH₂-O-CH₂-CH₂-O-CH₂-CH₂-O-CH₂-CH₂-OH u.s.w. als auch Reste, die die OH-Gruppe(n) innerhalb der Kette tragen wie z. B. -CH₂-O-CH₂-CH(OH)-CH₂-CH₃.

Weiterhin bevorzugt sind Verbindungen der Formel I, worin R¹ oder R² Phenyl, Benzyl, 2-Phenethyl, Allyl oder oder durch 1 bis 3 Sauerstoffatome unterbrochenes C₃-C₁₀-Alkyl ist.
Insbsondere bevorzugt sind Verbindungen der Formel I wobei R¹ oder R² Propyl oder Butyl oder Cyclohexyl , oder durch ein Sauerstoff unterbrochenes C₄-C₆-Alkyl ist.

Die Verbindungen der Formel I sind zur Erzielung der Stabilisierung im chlorhaltigen Polymer zweckmäßig zu 0,01 bis 10 Gew.-%, vorzugsweise zu 0,05 bis 5 Gew.-%, insbesondere zu 0,1 bis 3 Gew.-% zu verwenden.

Die Verbindungen der Formel I sind weniger flüchtig als 1,3-disubstituierte Aminouracile und migrieren deshalb weniger aus der Polymermatrix, weshalb das Ausschwitz- und Plateout-Verhalten deutlich reduziert ist. Auch zeigen die beanspruchten Verbindungen tel quel oder verarbeitet in Polymeren eine bessere Lichtstabilität als 1,3-disubstituierte Verbindungen und sind deshalb besonders bevorzugt zu Verwenden bei Ausseneinsatz von Polymerformkörpern insbesondere bei PVC-Fenster-Profilen.

Ferner werden erfindungsgemäß neue Verbindungen der Formel (II) bereitgestellt

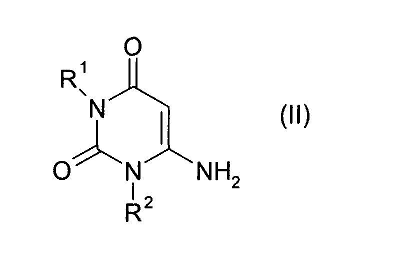

Bei diesen Verbindungen ist R¹ oder R² C₃-C₈-Cycloalkyl, C₄-C₁₀-Hydroxyalkyl oder Acetoxy/Benzoyloxy-C₂-C₁₀-Alkyl und R¹ oder R² gleich Wasserstoff.

Bezüglich der Definition der Reste R¹ oder R² gelten die weiteren Erläuterungen wie zuvor im Zusammenhang mit Verbindungen der Formel (I).

Weiterhin können Kombinationenen von Verbindungen der allgemeinen Formel I mit anderen üblichen Additiven bzw. Stabilisatoren eingesetzt werden, beispielsweise mit Polyolen und Disaccharidalkoholen und/oder Perchloratverbindungen und/oder Glycidylverbindungen und/oder Zeolithverbindungen und/oder Schichtgitterverbindungen (Hydrotalcite) sowie β-Diketone oder β-Ketoester und andere N-haltige Stabilisatoren wie in EP 967,245, EP 967,209, EP 967,208, EP 736,569, EP962,491, EP 390,739, WO 02/072684, EP 1,044,968, US 4,290,940, US 4,369,277,

WO 02/02685 und WO 02/072684 beschrieben. Beispiele für solche zusätzliche Komponenten sind nachfolgend aufgeführt und erläutert.

### Polyole und Disaccharidalkohole

Als Verbindungen dieses Typs kommen beispielsweise in Betracht:
Pentaerythrit, Dipentaerythrit, Tripentaerythrit, Trimethylolethan, Bistrimethylolpropan, Inosit (Cyclite), Polyvinylalkohol, Bistrimethylolethan, Trimethylolpropan, Sorbit (Hexite), Maltit, Isomaltit, Cellobiit, Lactit, Lycasin, Mannit, Lactose, Leucrose, Tris-(hydroxyethyl)-isocyanurat, Tris-(hydroxypropyl)-isocyanurat, Palatinit, Tetramethylolcyclohexanol, Tetramethylolcyclopentanol, Tetramethylolcyclopyranol, Xylit, Arabinit (Pentite), Tetrite, Glycerin, Diglycerin, Polyglycerin, Thiodiglycerin oder 1-0-a-D-Glycopyranosyl-D-mannit-dihydrat. Bevorzugt sind davon die Disaccharidalkohole.
Verwendung finden können auch Polyolsirupe, wie Sorbit-, Mannit- und Maltitsirup. Die Polyole können in einer Menge von beispielsweise 0,01 bis 20, zweckmäßig von 0,1 bis 20 und insbesondere von 0,1 bis 10 Gew.-Teilen bezogen auf 100 Gew.-Teile PVC, angewandt werden.

### Perchloratsalze

Beispiele sind diejenigen der Formel M(ClO₄)ₙ, wobei M für Li, Na, K, Mg, Ca, Sr, Ba, Zn, Al, La oder Ce steht. Der Index n ist entsprechend der Wertigkeit von M 1, 2 oder 3. Die Perchloratsalze können mit Alkoholen (Polyolen,Cyclodextrinen), oder Ätheralkoholen bzw. Esteralkoholen komplexiert oder gelöst sein. Zu den Esteralkoholen sind auch die Polyolpartialester zu zählen. Bei mehrwertigen Alkoholen oder Polyolen kommen auch deren Dimere, Trimere, Oligomere und Polymere in Frage, wie Di-, Tri- , Tetra- und Polyglycole, sowie Di-, Tri- und Tetrapentaerythrit oder Polyvinylalkohol in verschiedenen Polymerisationsgraden.

Als weitere Lösungsmittel kommen Phosphatester sowie cyclische und acyclische Kohlensäureester in Frage.
Die Perchloratsalze können dabei in verschiedenen gängigen Darreichungsformen eingesetzt werden; z. B als Salz oder Lösung in Wasser oder einem organischen Solvens als solches, bzw. aufgezogen auf ein Trägermaterial wie PVC, Ca-Silikat, Zeolithe oder Hydrotalcite, oder eingebunden durch chemische Reaktion in einen Hydrotalcit oder eine andere Schichtgitterverbindung. Als Polyolpartialether sind Glycerinmonoether und Glycerinmonothioether bevorzugt.
Weitere Ausführungsformen werden beschrieben in EP 0 394 547, EP 0 457 471 und WO 94/24200.
Die Perchlorate können in einer Menge von beispielsweise 0,001 bis 5, zweckmäßig 0,01 bis 3, besonders bevorzugt 0,01 bis 2 Gew.-Teilen, bezogen auf 100 Gew.-Teile PVC, angewandt werden.

### Glycidylverbindungen

Sie enthalten die Glycidylgruppe 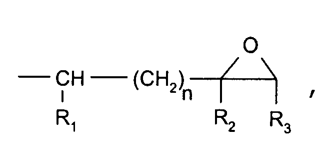 wobei diese direkt an Kohlenstoff, Sauerstoff-, Stickstoff- oder Schwefelatome gebunden ist, und worin entweder R₁ und R₃ beide Wasserstoff sind, R₂ Wasserstoff oder Methyl und n = 0 ist, oder worin R₁ und R₃ zusammen -CH₂-CH₂- oder -CH₂-CH₂-CH₂- bedeuten, R₂ dann Wasserstoff und
n = 0 oder 1 ist. Es handelt sich somit um Glycidylether- oder -thioether bzw. ―ester sowie um N- und C-Glycidylverbindungen.
I) Glycidyl- und β-Methylglycidylester erhältlich durch Umsetzung einer Verbindung mit mindestens einer Carboxylgruppe im Molekül und Epichlorhydrin bzw. Glycerindichlorhydrin bzw. b-Methyl-epichlorhydrin. Die Umsetzung erfolgt zweckmäßig in Gegenwart von Basen.
   Als Verbindungen mit mindestens einer Carboxylgruppe im Molekül können aliphatische Carbonsäuren verwandt werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin-, Myristin-, Palmitin-, Stearin- und Pelargonsäure, sowie die bei den organischen Zinkverbindungen erwähnten.Säuren.
   Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.
   Weiterhin können aromatische Carbonsäuren Verwendung finden, wie beispielsweise Benzoesäure, Phthalsäure, Isophthalsäure, Trimellithsäure oder Pyromellithsäure. Ebenfalls können auch carboxylterminierte Addukte, z. B. von Trimellithsäure und
   Polyolen, wie beispielsweise Glycerin oder 2,2-Bis-(4-hydroxycyclohexyl)-propan verwandt werden.
   Weitere im Rahmen dieser Erfindung verwendbare Epoxidverbindungen finden sich in der EP 0506 617.
II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.
   Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie C₇-C₉-Alkanol- und C₉-C₁₁-Alkanolgemischen.
   Sie leiten sich aber auch beispielsweise ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.
   Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.
   Weitere mögliche endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.
III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.
   Zu den (N-Glycidyl)-Verbindungen zählen aber auch N,N'-Di-, N,N',N"-Tri- und N,N',N",N'''-Tetraglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.
IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.
V) Epoxidverbindungen mit einem Rest der obigen Formel, worin R₁ und R₃ zusammen -CH₂-CH₂- bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Ein Epoxidharz mit einem Rest der obigen Formel, worin R₁ und R₃ zusammen -CH₂-CH₂- sind und n 1 bedeutet, ist beispielsweise 3,4-Epoxy-6-methyl-cyclohexancarbonsäure-(3',4'-epoxy-6'-methyl-cyclohexyl)-methylester.

Geeignete endständige Epoxide sind beispielsweise:
a) flüssige Bisphenol-A-diglycidylether wie Araldit®GY 240, Araldit®GY 250, Araldit®GY 260, Araldit®GY 266 oder GY 280, Araldit®GY 2600, Araldit®MY 790;
b) feste Bisphenol-A-diglycidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®GT 6609, Araldit®GT 6610;
c) flüssige Bisphenol-F-diglycidylether wie Araldit®GY 281, Araldit®PY 302, Araldit®PY 306;
d) feste Polyglycidylether von Tetraphenylethan wie CG Epoxy Resin®0163;
e) feste und flüssige Polyglycidylether von Phenolformaldehyd Novolak wie EPN 1138, EPN 1139, GY 1180, PY 307;
f) feste und flüssige Polyglycidylether von o-Cresolformaldehyd Novolak wie ECN 1235, ECN 1273, ECN 1280, ECN 1299;
g) flüssige Glycidylether von Alkoholen wie Shell® Glycidylether 162, Araldit®DY 0390, Araldit®DY 0391;
h) flüssige oder feste Glycidylester von Carbonsäuren wie Shell®Cardura E sowie Terephthalsäureester, Isophthalsäureester und Trimellithsäureester wie Araldit®PY 284 und Araldit®PT 910;
i) feste heterocyclische Epoxidharze (Triglycidylisocyanurat) wie Araldit® PT 810 sowie N-Glycidylphthalimid;
j) flüssige cycloaliphatische Epoxidharze wie Araldit®CY 179;
k) flüssige N,N,O-Triglycidylether von p-Aminophenol wie Araldit®MY 0510;
l) Tetraglycidyl-4-4'-methylenbenzamin oder N,N,N',N'-Tetraglycidyldiaminophenylmethan wie Araldit®MY 720, Araldit®MY 721.
m) polymere oder copolymere Glycidylester der Acryl- und der Methacrylsäure

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.
Vorwiegend werden Epoxidverbindungen, vor allem Diglycidylverbindungen, mit aromatischen Gruppen eingesetzt.
Gegebenenfalls kann auch ein Gemisch verschiedener Epoxidverbindungen eingesetzt werden.
Besonders bevorzugt sind als endständige Epoxidverbindungen Diglycidylether auf der Basis von Bisphenolen, wie beispielsweise von 2,2-Bis-(4-hydroxyphenyl)-propan (Bisphenol-A), Bis-(4-hydroxyphenyl)-methan oder Mischungen von Bis-(ortho/parahydroxyphenyl)-methan (Bisphenol-F).
Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

### Hydrotalcite und (Erd-)Alkalialumosilikate (Zeolithe)

Die chemische Zusammensetzung dieser Verbindungen ist dem Fachmann bekannt, z. B. aus den Patentschriften DE 3 843 581, US 4,000,100, EP 0 062 813 und WO 93/20135.
Verbindungen aus der Reihe der Hydrotalcite können durch die folgende allgemeine Formel

M²⁺ ₁₋ₓ M³⁺ ₓ(OH)₂(A^{b-})_{x/b} • d H₂O

beschrieben werden,
wobei
- M²⁺ =: eines oder mehrere der Metalle aus der Gruppe Mg, Ca, Sr, Zn oder Sn ist,
- M³⁺ =: Al, oder B ist,
- Aⁿ: ein Anion mit der Valenz n darstellt,
b eine Zahl von 1 - 2 ist,
- 0 < x: 0,5 ist,
- m: eine Zahl von 0 - 20 ist.

Bevorzugt ist
- Aⁿ =: OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻oder HPO₄²⁻ darstellt;
Beispiele für Hydrotalcite sind
Al₂O₃.6MgO.CO₂.12H₂O (i), Mg_{4,5}Al₂(OH)₁₃.CO₃.3,5H₂O (ii),
4MgO.Al₂O₃.CO₂.9H₂O (iii), 4MgO.Al₂O₃.CO₂.6H₂O,
ZnO.3MgO.Al₂O₃.CO₂.8-9H₂O und ZnO.3MgO.Al₂O₃.CO₂.5-6H₂O . Ganz besonders bevorzugt sind die Typen i, ii und iii.

### Zeolithe (Alkali bzw. Erdalkalialumosilikate)

Sie können durch die folgende allgemeine Formel

M_{x/n}[(AlO₂)ₓ(SiO₂)_{y}].wH₂O

beschrieben werden,
worin n die Ladung des Kations M;
M ein Element der ersten oder zweiten Hauptgruppe, wie Li, Na, K, Mg, Ca, Sr oder Ba;
y : x eine Zahl von 0,8 bis 15, bevorzugt von 0,8 bis 1,2; und
w eine Zahl von 0 bis 300, bevorzugt von 0,5 bis 30, ist.
Beispiele für Zeolithe sind Natriumalumosilikate der Formeln
Na₁₂Al₁₂Si₁₂O₄₈ . 27 H₂O [Zeolith A], Na₆Al₆Si₆O₂₄ . 2 NaX . 7,5 H₂O, X= OH, Halogen, ClO₄ [Sodalith]; Na₆Al₆Si₃₀O₇₂ . 24 H₂O; Na₈Al₈Si₄₀O₉₆ . 24 H₂O; Na₁₆Al₁₆Si₂₄O₈₀ . 16 H₂O; Na₁₆Al₁₆Si₃₂O₉₆ . 16 H₂O; Na₅₆Al₅₆Si₁₃₆O₃₈₄ . 250 H₂O [Zeolith Y], Na₈₆Al₈₆Si₁₀₆O₃₈₄ . 264 H₂O [Zeolith X];
oder die durch teilweisen bzw. vollständigen Austausch der Na-Atome durch Li-, K-, Mg-, Ca-, Sr- oder Zn-Atome darstellbaren Zeolithe wie
(Na,K)₁₀Al₁₀Si₂₂O₆₄ . 20 H₂O ; Ca_{4,5}Na₃[(AlO₂)₁₂(SiO₂)₁₂] . 30 H₂O; K₉Na₃[(AlO₂)₁₂(SiO₂)₁₂] . 27 *H*_{*2*}*O,*
Bevorzugte Zeolithe entsprechen den Formeln
Na₁₂Al₁₂Si₁₂O₄₈ . 27 H₂O [Zeolith A],
Na₆Al₆Si₆O₂₄ . 2NaX . 7,5 H₂O, X = OH, Cl, ClO₄, 1/2CO₃ [Sodalith] Na₆Al₆Si₃₀O₇₂ . 24 H₂O,
Na₈Al₈Si₄₀O₉₆ . 24 H₂O,
Na₁₆Al₁₆Si₂₄O₈₀ . 16 H₂O,
Na₁₆Al₁₆Si₃₂O₉₆ . 16 H₂O,
Na₅₆Al₅₆Si₁₃₆O₃₈₄ . 250 H₂O [Zeolith Y],
Na₈₆Al₈₆Si₁₀₆O₃₈₄. 264 H₂O [Zeolith X]
und solche X- und Y-Zeolithe mit einem Al/ Si-Verhältnis von ca. 1:1.
oder die durch teilweisen bzw. vollständigen Austausch der Na-Atome durch Li-, K-, Mg-, Ca-, Sr-, Ba- oder Zn-Atome darstellbaren Zeolithe wie
(Na,K)₁₀Al₁₀Si₂₂O₆₄ . 20 H₂O .
Ca_{4,5}Na₃[(AlO₂)₁₂(SiO₂)₁₂] . 30 H₂O
K₉Na₃[(AlO₂)₁₂(SiO₂)₁₂] . 27 H₂O
Die angeführten Zeolithe können auch wasserärmer bzw. wasserfrei sein. Weitere geeigente Zeolithe sind:
Na₂O·Al₂O₃·(2 bis 5) SiO₂·(3,5 bis 10) H₂O [Zeolith P]
Na₂O·Al₂O₃·2 SiO₂·(3.5-10)H₂O (Zeolith MAP)
oder die durch teilweisen bzw. vollständigen Austausch der Na-Atome durch Li-, K-oder H-Atome darstellbaren Zeolithe wie
(Li,Na,K,H)₁₀Al₁₀Si₂₂O₆₄ . 20 H₂O .
K₉Na₃[(AlO₂)₁₂(SiO₂)₁₂] . 27 H₂O
K₄Al₄Si₄O₁₆·6H₂O [Zeolith K-F]
Na₈Al₈Si₄₀O₉₆.24 H₂O Zeolith D, wie in Barrer et al., J. Chem. Soc. **1952**,
1561 - 71, und in US 2,950,952 beschrieben;
Ferner kommen folgende Zeolithe in Frage:
K-Offretit, wie in EP-A-400,961 beschrieben;
Zeolith R, wie in GB 841,812 beschrieben;
Zeolith LZ-217, wie in US 4,503,023 beschrieben;
Ca-freier Zeolith LZ-218, wie in US 4,333,859 beschrieben;
Zeolith T, Zeolith LZ-220, wie in US 4,503,023 beschrieben;
Na₃K₆Al₉Si₂₇O₇₂.21 H₂O [Zeolith L];
Zeolith LZ-211, wie in US 4,503,023 beschrieben;
Zeolith LZ-212, wie in US 4,503,023 beschrieben;
Zeolith O, Zeolith LZ-217, wie in US 4,503,023 beschrieben;
Zeolith LZ-219, wie in US 4,503,023 beschrieben;
Zeolith Rho, Zeolith LZ-214, wie in US 4,503,023 beschrieben;
Zeolith ZK-19, wie in Am. Mineral. **54** 1607 (1969) beschrieben;
Zeolith W (K-M), wie in Barrer et al., J. Chem. Soc. **1956**, 2882, beschrieben;
Na₃₀Al₃₀Si₆₆O₁₉₂. 98 H₂O [Zeolith ZK-5, Zeolith Q]
Besonders bevorzugt werden Zeolith P-Typen der obigen Formel verwandt, worin x 2 bis 5 und y 3.5 bis 10 sind, ganz besonders bevorzugt Zeolith MAP der genannten Formel, worin x 2 und y 3.5 bis 10 sind. Insbesondere handelt es sich um Zeolith Na-P, d. h. M steht für Na. Dieser Zeolith tritt im allgemeinen in den Varianten Na-P-1, NaP-2 und Na-P-3 auf, die sich durch ihre kubische, tetragonale oder orthorhombische Struktur unterscheiden (R. M. Barrer, B. M. Munday, J.Chem.Soc. A **1971**, 2909 - 14). In der ebengenannten Literatur ist auch die Herstellung von Zeolith P-1 und P-2 beschrieben. Zeolith P-3 ist danach sehr selten und daher kaum von praktischem Interesse. Die Struktur von Zeolith P-1 entspricht der aus dem obengenannten Atlas of Zeolite Structures bekannten Gismonditstruktur. In neuerer Literatur
(EP-A-384 070) wird zwischen kubischem (Zeolith B oder P_{C}) und tetragonalem (Zeolith P₁) Zeolith vom P-Typ unterschieden. Dort werden auch neuere Zeolithe des P-Typs mit Si:Al Verhältnissen unter 1,07:1 genannt. Hierbei handelt es sich um Zeolithe mit der Bezeichnung MAP oder MA-P für "Maximum Aluminium P". Je nach Herstellungsverfahren kann Zeolith P geringe Anteile anderer Zeolithe enthalten. Sehr reiner Zeolith P ist in WO 94/26662 beschrieben worden.
Im Rahmen der Erfindung lassen sich auch solche feinteiligen, wasserunlöslichen Natriumalumosilikate verwenden, die in Gegenwart von wasserlöslichen anorganischen oder organischen Dispergiermitteln gefällt und kristallisiert wurden. Diese können in beliebiger Weise vor oder während der Fällung bzw. Kristallisation in das Reaktionsgemisch eingebracht werden.
Ganz besonders bevorzugt sind Na-Zeolith A und Na-Zeolith P.
Weiterhin bevorzugt sind Zeolithe mit äußerst geringer Teilchengröße insbesondere vom Na-A- und Na-P-Typ wie sie auch in US 6.096.820 beschrieben sind.
Die Hydrotalcite und/oder Zeolithe können in Mengen von beispielsweise 0,1 bis 20, zweckmäßig 0,1 bis 10 und insbesondere 0,1 bis 5 Gew.-Teilen, bezogen auf 100 Gew.-Teile halogenhaltiges Polymer angewandt werden.

**Beta-Diketone, beta-Ketoester:** Verwendbare 1,3-Dicarbonylverbindungen können lineare oder cyclische Dicarbonylverbindungen sein. Bevorzugt werden Dicarbonylverbindungen der folgenden Formel verwandt: R'₁CO CHR₂'-COR'₃ worin R'₁ C₁-C₂₂-Alkyl, C₅-C₁₀-Hydroxyalkyl, C₂-C₁₈-Alkenyl, Phenyl, durch OH, C₁-C₄-Alkyl, C₁-C₄-Alkoxy oder Halogen substituiertes Phenyl, C₇-C₁₀-Phenylalkyl, C₅-C₁₂-Cycloalkyl, durch C₁-C₄-Alkyl substituiertes C₅-C₁₂-Cycloalkyl oder eine Gruppe -R'₅-S-R'₆ oder -R'₅-O-R'₆ bedeutet, R'₂ Wasserstoff, C₁-C₈-Alkyl,
C₂-C₁₂-Alkenyl, Phenyl, C₇-C₁₂-Alkylphenyl, C₇-C₁₀-Phenylalkyl oder eine Gruppe - CO-R'₄ bedeutet, R'₃ eine der für R'₁ gegebenen Bedeutungen hat oder C₁-C₁₈-Alkoxy bedeutet, R'₄ C₁-C₄-Alkyl oder Phenyl bedeutet,
R'₅ C₁-C₁₀-Alkylen bedeutet und R'₆ C₁-C₁₂-Alkyl, Phenyl, C₇-C₁₈-Alkylphenyl oder C₇-C₁₀-Phenylalkyl bedeutet.
Hierzu gehören die Hydroxylgruppen enthaltenden Diketone der EP 0 346 279 und die Oxa- und Thia-diketone der EP 0 307 358 ebenso wie die auf Isocyansäure basierenden Ketoester der US 4,339,383.
R'₁ und R'₃ als Alkyl können insbesondere C₁-C₁₈-Alkyl sein, wie z. B. Methyl, Ethyl, n-Propyl, Isopropyl, n-Butyl, tert Butyl, Pentyl, Hexyl, Heptyl, Octyl, Decyl, Dodecyl oder Octadecyl.
R'₁ und R'₃ als Hydroxyalkyl stellen insbesondere eine Gruppe -(CH₂)ₙ-OH dar,
worin n 5, 6 oder 7 ist.
R'₁ und R'₃ als Alkenyl können beispielsweise Vinyl, Allyl, Methallyl, 1-Butenyl, 1-Hexenyl oder Oleyl bedeuten, vorzugsweise Allyl.
R'₁ und R'₃ als durch OH, Alkyl, Alkoxy oder Halogen substituiertes Phenyl können beispielsweise Tolyl, Xylyl, tert Butylphenyl, Methoxyphenyl, Ethoxyphenyl, Hydroxyphenyl, Chlorphenyl oder Dichlorphenyl sein.
R'₁ und R'₃ als Phenylalkyl sind insbesondere Benzyl. R'₂ und R'₃ als Cycloalkyl oder Alkyl―cycloalkyl sind insbesondere Cyclohexyl oder Methylcyclohexyl.
R'₂ als Alkyl kann insbesondere C₁-C₄-Alkyl sein. R'₂ als C₂-C₁₂-Alkenyl kann insbesondere Allyl sein. R'₂ als Alkylphenyl kann insbesondere Tolyl sein. R'₂ als Phenylalkyl kann insbesondere Benzyl sein. Vorzugsweise ist R'₂ Wasserstoff. R'₃ als Alkoxy kann z. B. Methoxy, Ethoxy, Butoxy, Hexyloxy, Octyloxy, Dodecyloxy, Tridecyloxy, Tetradecyloxy oder Octadecyloxy sein. R'₅ als C₁-C₁₀-Alkylen ist insbesondere C₂-C₄-Alkylen. R'₆ als Alkyl ist insbesondere C₄-C₁₂-Alkyl, wie z. B. Butyl, Hexyl, Octyl, Decyl oder Dodecyl. R'₆ als Alkylphenyl ist insbesondere Tolyl. R'₆ als Phenylalkyl ist insbesondere Benzyl.
Beispiele für 1,3-Dicarbonylverbindungen der obigen Formel sowie deren Alkali-, Erdalkali- und Zinkchelate sind Acetylaceton, Butanoylaceton, Heptanoylaceton, Stearoylaceton, Palmitoylaceton, Lauroylaceton, 7-tert.-Nonylthio-heptandion-2,4, Benzoylaceton, Dibenzoylmethan, Lauroylbenzoylmethan, Palmitoyl-benzoylmethan, Stearoyl-benzoylmethan, Isooctylbenzoylmethan,
5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoylbenzoylmethan, Bis(4-methoxybenzoyl)methan, 1-Benzoyl-1-acetylnonan, Benzoylacetyl-phenylmethan, Stearoyl-4-methoxybenzoylmethan, Bis(4-tertbutylbenzoyl)methan, Benzoyl-formylmethan, Benzoyl-phenylacetylmethan, Biscyclohexanoyl-methan, Di-pivaloyl-methan, 2-Acetylcyclopentanon, 2-Benzoylcyclopentanon, Diacetessigsäuremethyl-, -ethyl- und -allylester, Benzoyl-, Propionyl- und Butyryl-acetessigsäuremethyl- und -ethylester, Triacetylmethan, Acetessigsäuremethyl-, -ethyl-, -hexyl-, -octyl-, -dodecyl- oder -octadecylester, Benzoylessigsäuremethyl-, -ethyl-, -butyl-, -2-ethylhexyl-, -dodecyl- oder -octadecylester, sowie Propionyl- und Butyrylessigsäure-C₁-C₁₈-alkylester. Stearoylessigsäureethyl-, -propyl-, -butyl-, -hexyl- oder -octylester sowie mehrkernige β-Ketoester wie in EP 0 433 230 beschrieben und Dehydracetsäure sowie deren Zink-, Magnesium- oder Alkalisalze. Bevorzugt sind CA-, Mg- und Zn-Salze des Acetylacetons und der Dehydracetsäure. Besonders bevorzugt sind 1,3-Diketoverbindungen der obigen Formel, worin R'₁ C₁-C₁₈-Alkyl, Phenyl, durch OH, Methyl oder Methoxy substituiertes Phenyl, C₇-C₁₀-Phenylalkyl oder Cyclohexyl ist, R'₂ Wasserstoff ist und R'₃ eine der für R'₁ gegebenen Bedeutungen hat.
Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, angewandt werden.

**Weitere N-haltige Stabilisatoren:** Harnstoffe, insbesondere Phenylharnstoff und Diphenylthioharnstoff, Indole (wie 2-Phenylindol), Aminophenole, β-Aminocrotonsäureester (wie die Bisester des 1,4-Butandiols und des Thiodiglycols) und Pyrrole (insbesondere 2-Pyrrolcarbonsäure, 2,4-Diphenylpyrrol und 2-Alkyl-4-phenyl-pyrrol-3-carbonsäureester).

**1,3-Disubstituierte 6-Aminouracile:** Diese können ggf. bei der Synthese von Verbindungen der Formel (I) mitanfallen und werden bei der Anwendung nicht abgetrennt sondern mitverwendet. Bevorzugt sind die Zweierkombinationen: Monopropyl- und Dipropyl-, Monobutyl- und Dibutyl-, Monohexyl- und Dihexyl, Monooctyl- und Dioctyl-, Monoallyl- und Diallyl, Monobenzyl- und Dibenzyl-, Mono-3-methoxypropyl- und Bis-3-methoxy-propyl sowie Mono-2-phenethyl- und Bis-2-phenethyl-6-aminouracil.

Die erfindungsgemässen Zusammensetzungen können auch mit weiteren üblichen Zusatzstoffen versetzt sein, wie etwa Stabilisierungs-, Hilfs- und Verarbeitungsmitteln, z. B. Alkali- und Erdalkaliverbindungen, Gleitmitteln, Weichmachern, Pigmenten, Füllstoffen, Phosphiten, Thiophosphiten und Thiophosphaten, Mercaptocarbonsäureestern, epoxidierten Fettsäureestern, Antioxidantien, UV-Absorbern und Lichtschutzmitteln, optischen Aufhellern, Schlagzähmodifikatoren und Verarbeitungshilfen, Geliermitteln, Antistatika, Biociden, Metalldesaktivatoren, Flammschutz- und Treibmitteln, Antifogagents, Kompatibilisatoren sowie Antiplateoutagents. (Vgl. "Handbook of PVC-Formulating" von E. J. Wickson, John Wiley & Sons, New York 1993). Es folgen Beispiele für derartige Zusatzstoffe:
**I. Füllstoffe:** Füllstoffe (HANDBOOK OF PVC FORMULATING E. J. Wickson, John Wiley & Sons, Inc., 1993, SS. 393 - 449) und Verstärkungsmittel (Plastics Additives Handbook" H. Zweifel, Carl Hanser Verlag, 5. Aufl., 2001,
   Seiten 901 - 948) (wie beispielsweise Calciumcarbonat, Dolomit, Wollastonit, Magnesiumoxid, Magnesiumhydroxid, Silikate, China-Clay, Talk, Glasfasern, Glaskugeln, Holzmehl, Glimmer, Metalloxide, oder Metallhydroxide, Ruß, Graphit, Gesteinsmehl, Schwerspat, Glasfasern, Talk, Kaolin und Kreide verwandt. Bevorzugt ist Kreide. Die Füllstoffe können in einer Menge von vorzugsweise mindestens 1 Teil, beispielsweise 5 bis 200, zweckmäßig 10 bis 150 und insbesondere 15 bis 100 Gew.-Teilen, bezogen auf 100 Gew.-Teile PVC, eingesetzt werden.
**II. Metallseifen:** Metallseifen sind in der Hauptsache Metallcarboxylate bevorzugt längerkettiger Carbonsäuren. Geläufige Beispiele sind Stearate und Laurate, auch Oleate und Salze kürzerkettiger Alkancarbonsäuren. Als Metallseifen sollen auch Alkylbenzoesäuren gelten. Als Metalle seien genannt: Li, Na, K, Mg, Ca, Sr, Ba, Zn, Al, La, Ce und Seltenerdenmetalle. Oft verwendet man sog. synergistische Mischungen wie Barium/Zink-, Magnesium/Zink- , Calcium/Zink- oder Calcium/Magnesium/Zink-Stabilisatoren. Die Metallseifen können einzeln oder in Mischungen eingesetzt werden insbesondere Ca-Stearat, Mg-Laurat oder -stearat. Eine Übersicht über gebräuchliche Metallseifen findet sich in Ullmanns Encyclopedia of Industrial Chemistry, 5^{th} Ed., Vol. A16 (1985), S. 361 ff.). Zweckmäßig verwendet man organische Metallseifen aus der Reihe der aliphatischen gesättigten C₂-C₂₂-Carboxylate, der aliphatischen ungesättigten
   C₃-C₂₂-Carboxylate, der aliphatischen C₂-C₂₂-Carboxylate, die mit wenigstens einer OH-Gruppe substituiert sind, der cyclischen und bicyclischen Carboxylate mit 5 - 22 C-Atomen, der unsubstituierten, mit wenigstens einer OH-Gruppe substituierten und/oder C₁-C₁₆-alkylsubstituierten Benzolcarboxylate, der unsubstituierten, mit wenigstens einer OH-Gruppe substituierten und/oder
   C₁-C₁₆-alkylsubstituierten Naphthalincarboxylate, der Phenyl-C₁-C₁₆-alkylcarboxylate, der Naphthyl-C₁-C₁₆-alkylcarboxylate oder der gegebenenfalls mit C₁-C₁₂-Alkyl substituierten Phenolate, Tallate und Resinate. Namentlich zu erwähnen sind, als Beispiele, die Zink-, Calcium-, Magnesium- oder Bariumsalze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Isostearinsäure, Stearinsäure, 12-Hydroxystearinsäure, Behensäure, Benzoesäure,
   p-tert-Butylbenzoesäure, N,N,-Dimethylhydroxybenzoesäure,
   3,5-Di-tert-butyl-4-hydroxybenzoesäure, Tolylsäure, Dimethylbenzoesäure, Ethylbenzoesäure, n-Propylbenzoesäure, Salicylsäure,
   p-tert-Octylsalicylsäure, und Sorbinsäure; Calcium-, Magnesium- und Zinksalze der Monoester der divalenten Carbonsäuren, wie Oxalsäure, Malonsäure, Bernsteinsäure, Glutarsäure, Adipinsäure, Fumarsäure, Pentan-1,5-dicarbonsäure,
   Hexan-1,6-dicarbonsäure, Heptan-1,7-dicarbonsäure, Octan-1,8-dicarbonsäure, Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure.
   Bevorzugt sind Calcium-, Magnesium- und Zink-Carboxylate von Carbonsäuren mit 7 bis 18 C-Atomen (Metallseifen im engeren Sinn), wie beispielsweise Benzoate oder Alkanoate, bevorzugt Stearat, Oleat, Laurat, Palmitat, Behenat, Hydroxystearate, Dihydroxystearate oder 2-Ethylhexanoat. Besonders bevorzugt sind Stearat, Oleat und p-tert-Butylbenzoat. Auch überbasische Carboxylate wie überbasisches Zinkoctoat sind bevorzugt. Ebenfalls bevorzugt sind überbasische Calciumseifen. Gegebenenfalls kann auch ein Gemisch von Carboxylaten unterschiedlicher Struktur eingesetzt werden.
   Bevorzugt sind Zusammensetzungen, wie beschrieben, enthaltend eine organische Zink- oder/und Calciumverbindung.
   Neben den genannten Verbindungen kommen auch organische Aluminium-Verbindungen in Frage, außerdem Verbindungen analog den oben erwähnten, insbesondere Aluminium-tri-stearat, Aluminium-di-stearat und Aluminium-monostearat, sowie Aluminiumacetat als auch davon abgeleitete basische Derivate.
   Zu den verwendbaren und bevorzugten Aluminium-Verbindungen finden sich weitere Erläuterungen in US 4,060,512 und US 3,243,394.
   Neben den bereits genannten Verbindungen kommen ferner auch organische Seltenerd-Verbindungen, insbesondere Verbindungen analog den oben erwähnten, in Frage. Unter dem Begriff Seltenerd-Verbindung sind vor allem Verbindungen der Elemente Cer, Praseodym, Neodym, Samarium, Europium, Gadolinium, Terbium, Dysprosium, Holmium, Erbium, Thulium, Ytterbium, Lutetium, Lanthan und Yttrium zu verstehen, wobei Gemische insbesondere mit Cer bevorzugt sind. Weitere bevorzugte Seltenerd-Verbindungen finden sich in der EP-A-0 108 023.
   Gegebenenfalls kann ein Gemisch von Zink-, Alkali-, Erdalkali-, Aluminium-, Cer-, Lanthan- oder Lanthanoid-Verbindung unterschiedlicher Struktur eingesetzt werden. Auch können organische Zink-, Aluminium-, Cer-, Alkali-, Erdalkali-, Lanthan- oder Lanthanoid-Verbindungen auf eine Alumosalz-Verbindung gecoatet sein; siehe hierzu auch DE-A-4 031 818.
   Die Metallseifen bzw. deren Mischungen können in einer Menge von beispielsweise 0,001 bis 10 Gew.-Teilen, zweckmäßig 0,01 bis 8 Gew.-Teilen, besonders bevorzugt 0,05 bis 5 Gew.-Teilen, bezogen auf 100 Gew.-Teile PVC, angewandt werden. Gleiches gilt für die weiteren Metallstabilisatoren:
**III. Weitere Metallstabilisatoren:** Hier sind vor allem die Organozinnstabilisatoren zu nennen. Insbesondere kann es sich um Carboxylate, Mercaptide und Sulfide handeln. Beispiele geeigneter Verbindungen sind in US 4,743,640 beschrieben.
**IV. Alkali und Erdalkali-Verbindungen:** Darunter versteht man vornehmlich die Carboxylate der oben beschriebenen Säuren, aber auch entsprechende Oxide bzw. Hydroxide oder Carbonate. Es kommen auch deren Gemische mit organischen Säuren in Frage. Beispiele sind LiOH, NaOH, KOH, CaO, Ca(OH₂), MgO, Mg(OH)₂, Sr(OH)₂, Al(OH)₃, CaCO₃ und MgCO₃ (auch basische Carbonate, wie beispielsweise Magnesia Alba und Huntit), sowie fettsaure Na- und K-Salze. Bei Erdalkali- und Zn-Carboxylaten können auch deren Addukte mit MO oder M(OH)₂
   (M = Ca, Mg, Sr oder Zn), sogenannte "overbased" Verbindungen, zum Einsatz kommen. Bevorzugt werden zusätzlich zur erfindungsgemäßen Stabilisatorkombination Alkali-, Erdalkali- und/oder Aluminiumcarboxylate eingesetzt.
**V. Gleitmittel:** Als Gleitmittel kommen beispielsweise in Betracht: Montanwachs, Fettsäureester, PE-Wachse, Amidwachse, Chlorparaffine, Glycerinester oder Erdalkaliseifen insbesondere Ca-Stearat. Verwendbare Gleitmittel sind auch in " Plastics Additives Handbook" H. Zweifel, Carl Hanser Verlag, 5. Aufl., 2001, Seiten 551 - 552 beschrieben. Zu erwähnen sind ferner Fettketone (wie in DE 4 204 887 beschrieben) sowie Gleitmittel auf Silikonbasis (wie in EP 0 225 261 beschrieben) oder Kombinationen davon, wie in EP 0 259 783 aufgeführt. Die Gleitmittel können auch auf eine Alumosalz-Verbindung aufgebracht werden; siehe hierzu auch DE-A-4 031 818.
**VI. Weichmacher** Als organische Weichmacher kommen beispielsweise solche aus den folgenden Gruppen in Betracht:
   A) Phthalsäureester: Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-,
      Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie C₇-C₉- und C₉-C₁₁-Alkylphthalate aus überwiegend linearen Alkoholen, C₆-C₁₀-n-Alkylphthalate und C₈-C₁₀-n-Alkylphthalate. Bevorzugt sind davon Dibutyl-, Dihexyl-, Di-2-ethylhexyl-, Di-n-octyl-, Di-iso-octyl-, Di-iso-nonyl-,
      Di-iso-decyl-, Di-iso-tridecyl- und Benzylbutyl-phthalat sowie die genannten Mischungen von Alkylphthalaten. Besonders bevorzugt sind
      Di-2-ethylhexyl-, Di-iso-nonyl- und Di-iso-decylphthalat, die auch unter den gebräuchlichen Abkürzungen DOP (Dioctylphthalat, Di-2-ethylhexyl-phthalat), DINP (Diisononylphthalat), DIDP (Diisodecylphthalat) bekannt sind.
   B) Ester aliphatischer Dicarbonsäuren, insbesondere Ester von Adipin-, Azelain- und Sebazinsäure: Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat,
      Di-2-ethylhexylsebacat und Di-iso-decylsebacat (Gemisch). Bevorzugt sind
      Di-2-ethylhexyladipat und Di-iso-octyladipat.
   C) Trimellithsäureester, beispielsweise Tri-2-ethylhexyltrimellithat, Tri-isodecyltrimellithat (Gemisch), Tri-iso-tridecyltrimellithat, Tri-iso-octyltrimellithat (Gemisch) sowie Tri-C₆-C₈-alkyl, Tri-C₆-C₁₀-alkyl-, Tri-C₇-C₉-alkyl- und Tri-C₉-C₁₁-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen. Gebräuchliche Abkürzungen sind TOTM (Trioctyltrimellitat, Tri-2-ethylhexyl―trimellitat), TIDTM (Triisodecyltrimellitat) und TITDTM (Triisotridecyltrimellitat).
   D) Epoxyweichmacher: In der Hauptsache sind das epoxidierte ungesättigte Fettsäuren wie z. B. epoxidiertes Sojabohnenöl.
   E) Polymerweichmacher: Eine Definition dieser Weichmacher und Beispiele für solche sind in "Kunststoffadditive", R. Gächter/H. Müller, Carl Hanser Verlag, 3. Aufl., 1989, Kapitel 5.9.6, Seiten 412 - 415, sowie in "PVC Technology ", W. V. Titow, 4^{th}. Ed., Elsevier Publ., 1984, Seiten 165 - 170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol.
   F) Phosphorsäureester: Eine Definition dieser Ester ist im vorstehend genannten "Taschenbuch der Kunststoffadditive" Kapitel 5.9.5, SS. 408 - 412, zu finden. Beispiele für solche Phosphorsäureester sind Tributylphosphat,
      Tri-2-ethylbutylphosphat, Tri-2-ethylhexylphosphat, Trichlorethylphosphat, 2-Ethylhexyl-di-phenylphosphat, Kresyldiphenylphosphat, Triphenylphosphat, Trikresylphosphat und Trixylenylphosphat. Bevorzugt sind Tri-2-ethylhexyl-phosphat sowie ®Reofos 50 und 95 (Ciba Spezialitätenchemie).
   G) Chlorierte Kohlenwasserstoffe (Paraffine)
   H) Kohlenwasserstoffe
   I) Monoester, z. B. Butyloleat, Phenoxyethyloleat, Tetrahydrofurfuryloleat und Alkylsulfonsäureester.
   J) Glykolester, z. B. Diglykolbenzoate.
   K) Citronensäureester, z. B. Tributylcitrat und Acetyltributylcitrat, wie in WO 02/05206 beschrieben
   L) Perhydrophthal-, -isophthal- und -terephthalester sowie Perhydroglycol- und diglycolbenzoatester. Bevorzugt ist Perhydro-diisononylphthalat (®Hexamoll DINCH ― Fa. BASF) wie in DE 19.756.913, DE 19.927.977, DE 19.927.978 und DE 19.927.979 beschrieben.
   Definitionen und Beispiele für Weichmacher der Gruppen G) bis J) sind den folgenden Handbüchern zu entnehmen:
   "Kunststoffadditive", R. Gächter/H. Müller, Carl Hanser Verlag, 3. Aufl., 1989, Kapitel 5.9.14.2, SS.422 - 425, (Gruppe G), und Kapitel 5.9.14.1, S. 422, (Gruppe H).
   "PVC Technology", W. V. Titow, 4^{th.} Ed., Elsevier Publishers, 1984, Kapitel 6.10.2, Seiten 171 - 173, (Gruppe G), Kapitel 6.10.5 Seite 174, (Gruppe H), Kapitel 6.10.3, Seite 173, (Gruppe I) und Kapitel 6.10.4, Seiten 173 - 174 (Gruppe J).
   Es können auch Mischungen unterschiedlicher Weichmacher verwandt werden.
   Die Weichmacher können in einer Menge von beispielsweise 5 bis 20 Gew.-Teilen, zweckmäßig 10 bis 20 Gew.-Teilen, bezogen auf 100 Gew.-Teile PVC, angewandt werden. Hart- bzw. Halbhart-PVC enthält bevorzugt bis zu 10 %, besonders bevorzugt bis zu 5 % oder keinen Weichmacher.
**VII. Pigmente:** Geeignete Stoffe sind dem Fachmann bekannt. Beispiele für anorganische Pigmente sind TiO₂, Pigmente auf Zirkonoxidbasis, BaSO₄, Zinkoxid (Zinkweiss) und Lithopone (Zinksulfid/Bariumsulfat), Ruß, Russ-Titandioxid-Mischungen, Eisenoxidpigmente, Sb₂O₃, (Ti,Ba,Sb)O₂ , Cr₂O₃, Spinelle wie Cobaltblau und Cobaltgrün, Cd(S,Se), Ultramarinblau. Organische Pigmente sind z. B. Azopigmente, Phthalocyaninpigmente, Chinacridonpigmente, Perylenpigmente, Diketo-pyrrolopyrrolpigmente und Anthrachinonpigmente. Bevorzugt ist TiO₂ auch in mikronisierter Form. Eine Definition und weitere Beschreibungen finden sich im "Handbook of PVC Formulating", E. J.Wickson, John Wiley & Sons, New York, 1993.
**VIII. Phosphite (Phosphorigsäuretriester):** Beispiele sind Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit―diphosphit, Bis-(2,4-di-tert-butylphenyl)-pentaerythritdiphosphit, Bis-(2,6-di-tert―butyl-4-methylphenyl)-pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)-pentaerythritdiphosphit, Tristearyl-sorbit―triphosphit, Bis-(2,4-di-tert-butyl-6-methylphenyl)-methylphosphit, Bis-(2,4-di-tert―butyl-6-methylphenyl)-ethylphosphit. Besonders geeignete sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z. B. Phenyldidecyl-, (2,4-Di-tert-butylphenyl)-di-dodecylphosphit, (2,6-Di-tert- butylphenyl)-di-dodecylphosphit und die Dialkyl-und Diaryl-pentaerythrit-diphosphite, wie Distearylpentaerythrit-diphosphit, sowie nichtstöchiometrische Triarylphosphite. z. B. der Zusammensetzung (H₁₉C₉-C₆H₄)O_{1,5}P(OC_{12,13}H_{25,27})_{1,5} oder (H₈C₁₇-C₆H₄)O₂P(i-C₈H₁₇O) oder (H₁₉C₉-C₆H₄)O_{1,5}P(OC_{9,11}H_{19,23})_{1,5} oder 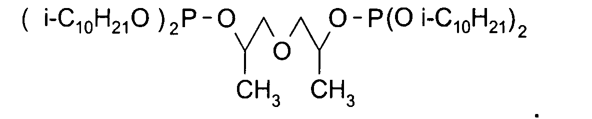 Bevorzugte organische Phosphite sind Distearyl-pentaerythrit-diphosphit, Trisnonylphenylphosphit und Phenyl-didecyl-phosphit. Als weiteres kommen Phosphorigsäurediester (mit o.g. Resten) sowie Phosphorigsäuremonoester (mit o.g. Resten) evtl. auch als Alkali-, Erdalkali-, Zink- oder Aluminiumsalz in Betracht. Diese Phosphorigsäureester können auch auf eine Alumosalz-Verbindung aufgebracht sein; siehe hierzu auch DE-A-4 031 818.
   Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewandt werden.
**IX. Thiophosphite und Thiophosphate:** Unter Thiophosphiten bzw.Thiophosphaten sind Verbindungen vom allgemeinen Typ: (RS)₃P, (RS)₃P=O bzw. (RS)₃P=S zu verstehen, wie sie etwa in den Patentschriften DE 2 809 492, EP 0 090 770 und EP 0 573 394 beschrieben werden. Beispiele für diese Verbindungen sind: Trithiohexylphosphit, Trithiooctylphosphit, Trithio-laurylphosphit, Trithiobenzylphosphit, Trithiophosphorigesäure-tris-(carbo-i-octyloxy)-methyl-ester. Trithiophosphorigsäure-tris-(carbo-trimethylcyclohexyloxy)-methylester, Trithiophosphorsäure-S,S,S-tris-(carbo-i-octyloxy)-methylester, Trithiophosphorsäure-S,S,Stris-(carbo-2-ethylhexyloxy)-methylester, Trithiophosphorsäure-S,S,S-tris-1-(carbohexyloxy)-ethylester, Trithiophosphorsäure-S,S,S-tris-1-(carbo-2-ethylhexyloxy)-ethalester, Trithio-phosphorsäure-S,S,S-tris-2-(carbo-2-ethylhexyloxy)-ethylester.
**X. Mercaptocarbonsäure-Ester:** Beispiele für diese Verbindungen sind: Ester der Thioglycolsäure, Thioäpfelsäure, Mercaptopropionsäure, der Mercaptobenzoesäuren bzw. der Thiomilchsäure, Mercaptoethylstearat und -oleat, wie sie in den Patenten FR 2 459 816, EP0 090 748, FR 2 552 440, EP 0 365 483 beschrieben sind. Die gen. Mercaptocarbonsäure-Ester umfassen auch Polyolester bzw. deren Partialester, sowie davon abgeleitete Thioether.
**XI. Epoxidierte Fettsäureester und andere Epoxidverbindungen:** Die erfindungsgemäße Stablisatorkombination kann zusätzlich vorzugsweise mindestens einen epoxidierten Fettsäureester enthalten. Es kommen dafür vor allem Ester von Fettsäuren aus natürlichen Quellen (Fettsäureglyceride), wie Sojaöl oder Rapsöl, in Frage. Es können aber auch synthetische Produkte zum Einsatz kommen, wie epoxidiertes Butyloleat. Ebenso verwendet werden können epoxidiertes Polybutadien und Polyisopren, gegebenenfalls auch in partiell hydroxylierter Form, oder Glycidylacrylat und Glycidylmethacrylat als Homo- bzw. Copolymer. Diese Epoxyverbindungen können auch auf eine Alumosalz-Verbindung aufgebracht sein; siehe hierzu auch DE-A-4 031 818.
**XII. Antioxidantien:** Als solche kommen beispielsweise in Betracht:
   Alkylierte Monophenole, z. B. 2,6-Di-tert-butyl-4-methylphenol, 2-tert-butyl--4,6-dimethylphenol, 2,6-Di-tert-butyl-4-ethylphenol, 2,6-Di-tert-butyl-4-nbutylphenol, 2,6-Di-tert―butyl-4-iso-butylphenol, 2,6-Di-cyclopentyl-4-methylphenol, 2-(alpha-Methylcyclohexyl)-4,6-dimethylphenol, 2,6-Di-octadecyl-4-methylphenol, 2,4,6-Tri-cyclohexylphenol, 2,6-Di―tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol, Octylphenol, Nonylphenol,Dodecylphenol und Mischungen davon.
   Alkylthiomethylphenole, z. B. 2,4-Di-octylthiomethyl-6-tert-butylphenol, 2,4-Di―octylthiomethyl-6-methylphenol, 2,4-Di-octylthiomethyl-6-ethylphenol, 2,6-Di-dodecylthiomethyl-4-nonylphenol.
   Alkylierte Hydrochinone, z. B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di―tert-butyl-4-hydroxyanisol, 3,5-Di-tert-butyl-4-hydroxyphenyl-stearat, Bis-(3,5-di-tert-butyl-4-hydroxyphenyl)adipat.
   Hydroxylierte Thiodiphenylether, z. B. 2,2'-Thio-bis-(6-tert-butyl-4-methylphenol), 2,2'―Thio-bis-(4-octylphenol), 4,4'-Thio-bis-(6-tert-butyl-3-methylphenol), 4,4'―Thio-bis-(6-tert-butyl-2-methylphenol), 4,4'-Thio-bis-(3,6-disec.-amylphenol), 4,4'-Bis-(2,6-dimethyl-4-hydroxyphenyl)-disulfid.
   Alkyliden-Bisphenole, z. B. 2,2'-Methylen-bis-(6-tert-butyl-4-methylphenol), 2,2'―Methylen―bis-(6-tert-butyl-4-ethylphenol), 2,2'-Methylen-bis-[4-methyl-6-(alpha―methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tertbutylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(alpha-methylbenzyl)-4-nonylphenol], 2,2'-Methylen-bis-[6-(alpha,alpha-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methyl-phenyl)-3-n-dodecylmercaptobutan, Ethylenglycol―bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'―hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.
   Benzylverbindungen, z. B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzyl-mercaptoacetat.
   Hydroxybenzylierte Malonate, z. B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di―dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.
   Hydroxybenzyl-Aromaten, z. B. 1,3,5-Tris-(3,5-di-tert-butyl-4-hydroxybenzyl)--2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.
   Triazinverbindungen, z. B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.
   Phosphonate und Phosphonite, z. B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzylphosphonsäure-monoethyleste rs, Tetrakis-(2,4-di-tert-butylphenyl)-4,4'-biphenylen―diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin.
   Acylaminophenole, z. B. 4-Hydroxy-laurinsäureanilid, 4-Hydroxystearinsäureanilid, N-(3,5-di-tert-butyl-4-hydroxyphenyl)-carbaminsäureoctylester.
   Ester der beta-(3,5-Di-tert-butyl-4-hydroxyphenyl)-propionsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Dipentaerythrit, Tris-(hydroxyethyl)-isocyanurat, N,N'―Bis-(hydroxyethyl)-oxalsäurediamid, 3-Thiaundecanol, 3-Thiapentadecanol, Trimethylhexandiol, Trimethylolpropan, Ditrimethylolpropan, 4-Hydroxymethyl-1-phospha-2,6,7-trioxabicyclo-[2.2.2]-octan.
   Ester der beta-(5-tert-Butyl-4-hydroxy-3-methylphenyl)-propionsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethylisocyanurat, N,N'-Bis-(hydroxyethyl)-oxalsäurediamid, 3-Thia-undecanol, 3-Thiapentadecanol, Trimethylhexandiol, Trimethylolpropan, 4-Hydroxymethyl-1-phospha-2,6,7-trioxabicyclo-[2.2.2]-octan.
   Ester der beta-(3,5-Dicyclohexyl-4-hydroxyphenyl)-propionsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethylisocyanurat, N,N'-Bis-(hydroxyethyl)-oxalsäurediamid, 3-Thia-undecanol, 3-Thiapentadecanol, Trimethylhexandiol, Trimethylolpropan, 4-Hydroxymethyl-1-phospha-2,6,7-trioxabicyclo-[2.2.2]-octan.
   Ester der 3,5-Di-tert-bulyl-4-hydroxyphenylessigsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethylisocyanurat, N,N'-Bis-(hydroxyethyl)-oxalsäurediamid, 3-Thia-undecanol, 3-Thiapentadecanol, Trimethylhexandiol, Trimethylolpropan, 4-Hydroxymethyl-1-phospha-2,6,7-trioxabicyclo-[2.2.2]-octan.
   Amide der beta-(3,5-Di-tert-butyl-4-hydroxyphenyl)-propionsäure, wie z. B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.
   Vitamin D (Tocopherol) und Abkömmlinge
      Bevorzugt sind Antioxidantien der Gruppen 1-5, 10 und 12 insbesondere 2,2-Bis-(4-hydroxyphenyl)-propan, Ester der 3,5-Di-tert-butyl-4-hydroxyphenylpropionsäure mit Octanol, Octadecanol oder Pentaerythrit oder Tris-(2,4-di-tert-butylphenyl)-phosphit. Gegebenenfalls kann auch ein Gemisch von Antioxidantien unterschiedlicher Struktur eingesetzt werden.
      Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewandt werden. Genauere Ausführungen zu Antioxidantien (Definition, Beispiele) finden sich in Plastics Additives Handbook" H. Zweifel, Carl Hanser Verlag, 5. Aufl., 2001, Seiten 1 - 139.
**XIII. UV-Absorber und Lichtschutzmittel:** Beispiele dafür sind:
   2-(2'-Hydroxyphenyl)-benztriazole, wie z. B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'-hydroxyphenyl)-5-chlor-benztriazol, 2-(3'-tert-Butyl- 2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis-(alpha,alpha―dimethylbenzyl)-2'-hydroxyphenyl)-benztriazol, Mischung aus 2-(3'-tert-Butyl-2'-hydroxy-5'-(2-octyloxycarbonylethyl)phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'hydroxy-5'-(2-octyloxycarbonylethyl)phenyl)-benztriazol, 2-(3'-tert-Butyl-5'-[2-(2-ethylhexyloxy)carbonylethyl ]-2'-hydroxyphenyl)-benztriazol, 2-(3'-Dodecyl-2'-hydroxy-5'―methylphenyl)-benztriazol, und 2-(3'-tert-Butyl-2'-hydroxy-5'-(2-isooctyloxycarbonylethyl)phenyl-benztriazol, 2,2'-Methylen-bis[4-(1,1,3,3-tetramethylbutyl)-6-benztriazol-2-yl-phenol]; Umesterungsprodukt von 2-[3'-tert-Butyl-5'-(2-methoxycarbonylethyl)-2'―hydroxy―phenyl]-benztriazol mit Polyethylenglycol 300; [R―CH₂CH₂―COO-CH₂CH₂⁆₂ mit R = 3'-tert-Butyl-4'-hydroxy-5'-2H--benztriazol-2-yl-phenyl.
   2-Hydroxybenzophenone, wie z. B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
   Ester von gegebenenfalls substituierten Benzoesäuren, wie z. B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
   Acrylate, wie z. B. alpha-Cyan-beta,beta-diphenylacrylsäure-ethylester bzw. - isooctylester, alpha-Carbomethoxy-zimtsäuremethylester, alpha-Cyano-beta-methylp-methoxy-zimtsäuremethylester bzw. -butylester, alpha-Carbomethoxy-p-methoxyzimtsäure-methylester, N-(beta-Carbomethoxy-b-cyanovinyl)-2-methyl-indolin.
   Nickelverbindungen, wie z. B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure―monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
   Oxalsäurediamide, wie z. B. 4,4'-Di-octyloxy-oxanilid, 2,2'-Di-octyloxy-5,5'-di-tert―butyl―oxanilid, 2,2'-Di-dodecyloxy-5,5'di-tert-butyl-oxanilid, 2-Ethoxy-2'-ethyloxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.
   2-(2-Hydroxyphenyl)-1,3,5-triazine, wie z. B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.
   Sterisch gehinderte Amine, wie z. B. Bis(2,2,6,6-tetramethyl-piperidin-4-yl)-sebacat, Bis(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-ditert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-a-olefin-copolymer und 2,2,6,6-Tetramethyl-4-aminopiperidin oder 1,2,2,6,6-Pentamethyl-4-aminopiperidin. Nähere Erläuterungen hierzu (Definition, weitere Beispiele) finden sich in Plastics Additives Handbook" H. Zweifel, Carl Hanser Verlag, 5. Aufl., 2001, Seiten 141 - 425.
**XIV. Treibmittel:** Treibmittel sind z. B. organische Azo- und Hydrazoverbindungen, Tetrazole, Oxazine, Isatosäureanhydrid, sowie Soda und Natriumbicarbonat. Bevorzugt sind Azodicarbonamid und Natriumbicarbonat sowie deren Mischungen. Definitionen und Beispiele für Schlagzähmodifikatoren und Verarbeitungshilfen, Geliermittel, Antistatika, Biocide, Metalldesaktivatoren, optische Aufheller, Flammschutzmittel, Antifogging-agents sowie Kompatibilisatoren sind beschrieben in "Kunststoffadditive", R. Gächter/H. Müller, Carl Hanser Verlag, 3. Aufl., 1989, und im "Handbook of Polyvinyl Chloride Formulating" E. J. Wilson, J. Wiley & Sons, 1993, sowie in "Plastics Additives" G. Pritchard, Chapman & Hall, London, 1st Ed., 1998. Schlagzähmodifikatoren sind ferner ausführlich beschrieben in "Impact Modifiers for PVC", J. T. Lutz/D. L. Dunkelberger, John Wiley & Sons, 1992.

Bevorzugt sind ferner physiologisch einwandfreie Stabilisierungen unter Verwendung von epoxidierten Fettsäureestern und/oder Trinonylphosphit bzw. Distearylpentaeriythrit-diphosphit und/oder Natriumperchloraten.
Ferner bevorzugt sind neben den aufgeführten Zweier- auch Dreier- und höhere Kombinationen wie beispielsweise Zeolithe und Perchloratsalze, Hydrotalcite und Perchloratsalze, epoxidierte Fettsäureester und Perchloratsalze, Glycidylverbindungen und Perchloratsalze, Phosphite und Perchloratsalze, Calciumstearat und Perchloratsalze sowie Magnesiumlaurat und Perchloratsalze oder Phosphite, epoxidierte Fettsäureester und Perchloratsalze; Phosphite, Glycidylverbindungen und Perchloratsalze; Phosphite, Zeolithe und Perchloratsalze; Phosphite, Hydrotalcite und Perchloratsalze; Calciumstearat, Zeolithe und Perchloratsalze; Calciumstearat, Hydrotalcite und Perchloratsalze, Magnesiumlaurat, Zeolithe und Perchloratsalze sowie die Kombination dieser Dreikomponentenmischungen mit Phosphiten. Weiterhin kann als Kombinationspartner verwendet werden Magnesiumoxid, Magnesiumhydroxid, Calciumoxid und Calciumhydroxid.

Beispiele für die zu stabilisierenden chlorhaltige Polymere oder deren Recyclate sind: Polymere des Vinylchlorides, Vinylidenchlorids, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadiens und deren Copolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate mit polymerisierbaren Verbindungen wie Acrylnitril, Vinylacetat oder ABS zu verstehen, wobei es sich um Suspensions-, Masse- oder Emulsionspolymerisate handeln kann. Bevorzugt ist ein PVC-Homopolymer, auch in Kombination mit Polyacrylaten.
Ferner kommen auch Pfropfpolymerisate von PVC mit EVA, ABS und MBS in Betracht. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Beispiele für solche Komponenten sind Zusammensetzungen aus (i) 20-80 Gew.-Teilen eines Vinylchlorid-Homopolymeren (PVC) und (ii) 80-20 Gew.-Teile mindestens eines thermoplastischen Copolymerisats auf der Basis von Styrol und Acrylnitril, insbesondere aus der Gruppe ABS, NBR, NAR, SAN und EVA. Die verwandten Abkürzungen für die Copolymerisate sind dem Fachmann geläufig und bedeuten folgendes: ABS: Acrylnitril-Butadien-Styrol; SAN: Styrol-Acrylnitril; NBR: Acrylnitril-Butadien; NAR: Acrylnitril-Acrylat; EVA: Ethylen-Vinylacetat. Es kommen insbesondere auch Styrol-Acrylnitril-Copolymerisate auf Acrylat-Basis (ASA) in Betracht. Bevorzugt als Komponente sind in diesem Zusammenhang Polymerzusammensetzungen, die als Komponenten (i) und (ii) eine Mischung aus
25 - 75 Gew.-% PVC und 75 - 25 Gew.-% der genannten Copolymerisate enthalten. Beispiele für solche Zusammensetzungen sind: 25 - 50 Gew.-% PVC und
75 - 50 Gew.-% Copolymerisate bzw. 40 - 75 Gew.-% PVC und 60 - 25 Gew.-% Copolymerisate. Bevorzugte Copolymerisate sind ABS, SAN und modifiziertes EVA, insbesondere ABS. Besonders geeignet sind auch NBR, NAR und EVA. In der erfindungsgemäßen Zusammensetzung können eines oder mehrere der genannten Copolymerisate vorhanden sein. Von besonderer Bedeutung sind als Komponente Zusammensetzungen, die (i) 100 Gewichtsteile PVC, und (ii) 0 -300 Gewichtsteile ABS und/oder mit SAN modifiziertes ABS und 0 - 80 Gewichtsteile der Copolymeren NBR, NAR und/oder EVA, insbesondere jedoch EVA.
Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat. In den Recyclaten können auch kleine Mengen an Fremdstoffen enthalten sein, wie z. B. Papier, Pigmente, Klebstoffe, die oft schwierig zu entfernen sind. Diese Fremdstoffe können auch aus dem Kontakt mit diversen Stoffen während des Gebrauchs oder der Aufarbeitung stammen, wie z. B. Treibstoffreste, Lackanteile, Metallspuren und Initiatorreste.

Die erfindungsgemäße Stabilisierung ist besonders bei PVC-Formulierungen von Vorteil, wie sie für Rohre und Profile üblich sind. Die Stabilisierung kann ohne Schwermetallverbindungen (Sn-, Pb-, Cd-, Zn-Stabilisatoren) durchgeführt werden. Diese Eigenschaft bietet auf bestimmten Gebieten Vorteile, weil Schwermetalle - mit Ausnahmen von allenfalls Zink - sowohl bei der Produktion als auch bei der Anwendung bestimmter PVC-Artikel aus ökologischen Gründen oft unerwünscht sind. Auch bereitet die Herstellung von Schwermetallstabilisatoren aus gewerbehygienischer Hinsicht oftmals Probleme. Ebenfalls ist die Verhüttung von schwermetallhaltigen Erzen sehr oft mit gravierenden Einflüssen auf die Umwelt verbunden, wobei Umwelt das Biosystem Mensch, Tier (Fisch), Pflanze, Luft und Boden mit einschließt. Aus diesen Gründen ist auch die Verbrennung bzw. Deponierung von schwermetallhaltigen Kunststoffen umstritten.

Die Erfindung betrifft auch ein Verfahren zur Stabilisierung von PVC, dadurch gekennzeichnet, daß man diesem mindestens eine der oben erwähnten Stabilisatorkombinationen zufügt.

Zweckmäßig kann die Einarbeitung der Stabilisatoren nach folgenden Methoden erfolgen: als Emulsion oder Dispersion (Eine Möglichkeit ist z. B. die Form einer pastösen Mischung. Ein Vorteil der erfindungsgemäßen Kombination besteht bei dieser Darreichungsform in der Stabilität der Paste.); als Trockenmischung während des Vermischens von Zusatzkomponenten oder Polymermischungen; durch direktes Zugeben in die Verarbeitungsapparatur (z. B. Kalander, Mischer, Kneter, Extruder und dergleichen) oder als Lösung oder Schmelze.
Das erfindungsgemäß stabilisierte PVC, das die Erfindung ebenfalls betrifft, kann auf an sich bekannte Weise hergestellt werden, wozu man unter Verwendung an sich bekannter Vorrichtungen wie der oben genannten Verarbeitungsapparaturen die erfindungsgemäße Stabilisatorkombination und gegebenenfalls weitere Zusätze mit dem PVC vermischt. Hierbei können die Stabilisatoren einzeln oder in Mischung zugegeben werden oder auch in Form sogenannter Masterbatches.
Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen oder Spinnen, ferner Extrusions-Blasen. Das stabilisierte PVC kann auch zu Schaumstoffen verarbeitet werden.
Ein erfindungsgemäß stabilisiertes PVC eignet sich z. B. besonders für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Bürofolien und Apparatur-Gehäuse (Computer, Haushalteräte).
Bevorzugt sind PVC-Hartschaumstoff-Formkörper und PVC-Rohre wie für Trink- oder Abwasser, Druckrohre, Gasrohre, Kabelkanal- und Kabelschutzrohre, Rohre für Industrieleitungen, Sickerrohre, Abflußrohre, Dachrinnenrohre und Drainagerohre. Näheres hierzu siehe "Kunststoffhandbuch PVC", Band 2/2, W. Becker/H. Braun, 2. Aufl., 1985, Carl Hanser Verlag, Seiten 1236 - 1277.

Die folgenden Beispiele erläutern die Erfindung ohne sie jedoch zu beschränken. Teile und Prozentangaben beziehen sich wie auch in der übrigen Beschreibung auf das Gewicht.

Die in der Tabelle 1 zusammengefaßten Stabilisatoren 1 - 5, 7 - 9 und 11 wurden nach bekannten Methoden, wie in Heterocycles, 53, 367 (2000);
Synth., 1995, 1295; Chem. Ber. 90, 2272 (1957);J. Org. Chem. 16, 1879 (1951); J. Amer. Chem. Soc. 63, 2567 (1941); EP 0001735 beschrieben, hergestellt oder sind im Chemikalienhandel erhältlich.

Die Synthese der neuen Verbindungen 6 und 10 ist nachfolgend beschrieben.

### Beispiel 1 (Verbindung 6):

### Herstellung von 1-(2-Acetoxyethyl)-6-aminouracil

### Edukt ist literaturbeschriebenes 1(2-Hydroxyethyl)-6-aminouracil (Subst. A).

In einen 250 ml-Dreihalskolben wird unter Rühren und Kühlung zu einem Gemisch aus 17,1 g (0,1 Mol) A, 0,5 g DMAP, 12 g (0,12 Mol) Et₃N und 40 ml DMA innerhalb von 60 min eine Lösung von 12 g (0,12 Mol) Ac₂O in 10 ml DMA bei einer Innentemperatur von ca. 20 °C zugetropft.

Anschließend wird 1 Stunde bei Raumtemperatur nachgerührt und der Mischung 50 ml MTBE zugesetzt. Die abgeschiedenen Kristalle (1,5 g) wurden als A identifiziert und verworfen. Das Filtrat wird i. Vakuum eingeengt und die abgeschiedenen Kristalle (1,5 g) wiederum verworfen. Nun wird das Filtrat im Ölpumpenvakuum konzentriert und der Rückstand aus 75 ml einer Mischung von n-PropOH/H₂O (3 : 1) umkristallisiert.

Man isoliert 10,3 g (entspr. 48,3 % d. Th.) hellbeiger Kristalle vom Fp. 225 °C, dessen ¹HMR-Spektrum mit der angegebenen Struktur verträglich ist.

### Beispiel 2 (Verbindung 10):

### Herstellung von 3-(2-Hydroxy-n-butyl)-6-aminouracil

Ein Gemisch aus 12,7 g (0,1 Mol) 6-Aminouracil und 28,8 g (0,4 Mol) 1,2-Butenoxid, 90 ml Wasser, 10 ml n-Propanol wird zusammen mit 0,4 g (0,1 Mol) Ätznatron unter Rühren 6,5 Stunden auf 133 °C erhitzt. Über Nacht schieden sich 2,5 g (22 %) Ausgangsuracil ab. Der verbleibende feste Rückstand (10,7 g) ergab im ¹H-NMR-Spektrum zu ca. 80 % gewünschtes Reaktionsprodukt. Durch fraktionierte Kristallisation aus Wasser wurde die gewünschte Substanz in einer Gesamtausbeute von 5,8 g erhalten (entspr. 30 % d. Th. bez. auf eingesetztes 6-Aminouracil). Die Substanz wurde als reines 3-Isomer charakterisiert. Der Schmelzpunkt lag bei 232 °C.

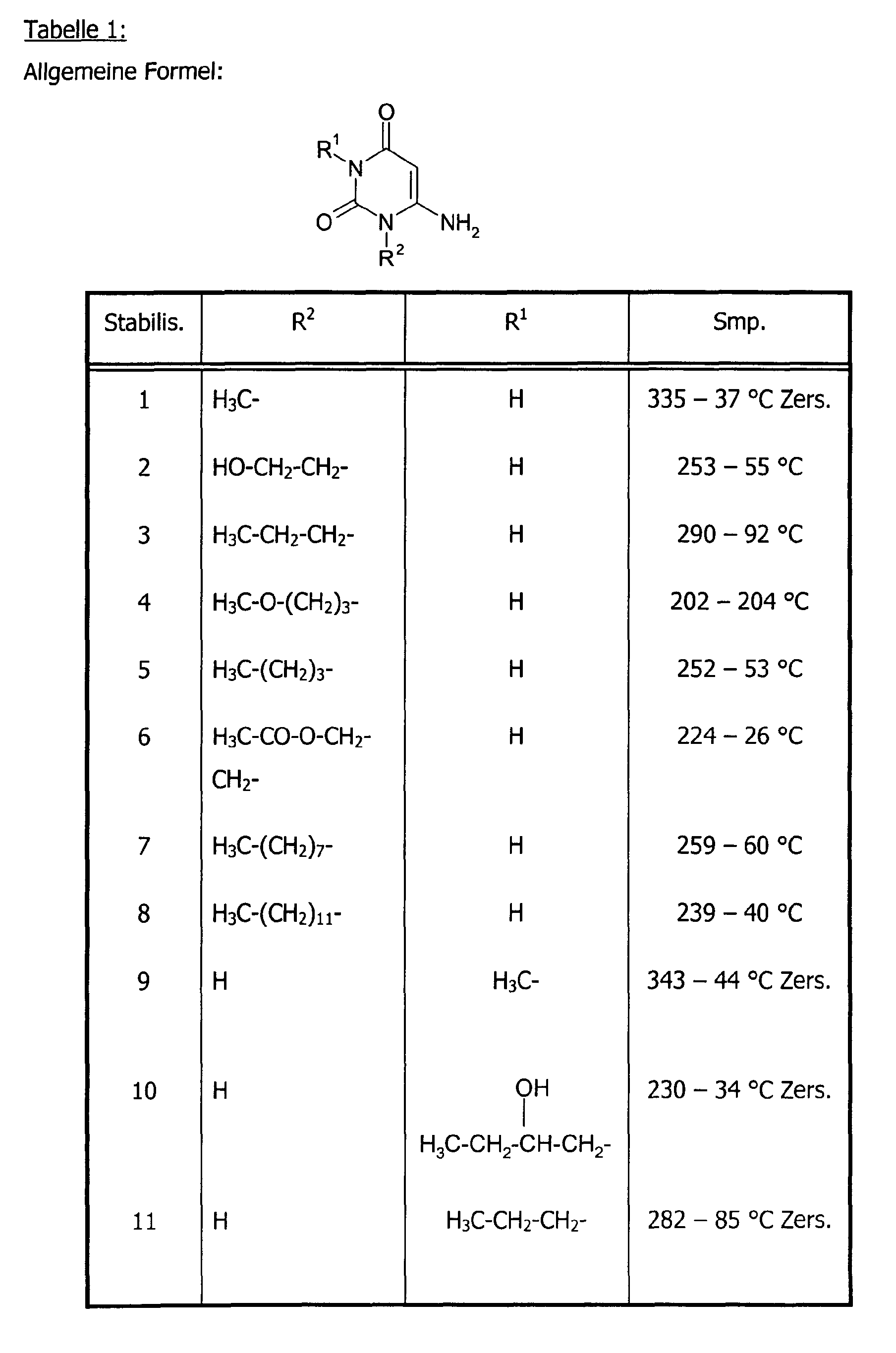

### Beispiel 3 (Statischer Hitzetest):

Eine Trockenmischung bestehend aus

| | |
|---|---|
| 100,0 Teilen | Evipol (Markenzeichen der Fa. EVC) SH 5730 = PVC K-Wert 57 |
| 5,0 Teilen | Paraloid (Markenzeichen der Fa. Röhm & Haas) BTA III N 2 = MBS (Methylmethacrylat-Butadien-Styrol) Modifier |
| 0,5 Teilen | Paraloid (Markenzeichen der Fa. Röhm & Haas) K 120 N = Verarbeitungshilfe Acrylat |
| 0,5 Teilen | Paraloid (Markenzeichen der Fa. Röhm & Haas) K 175 = Acrylat Verarbeitungshilfe |
| 1,0 Teilen | Loxiol G 16 = Fettsäurepartialester des Glyerins (ex Henkel) |
| 0,3 Teilen | Wachs E = Esterwachs (Montan-Wachs) (ex BASF) |
| 3,0 Teilen | ESO = epoxidiertes Sojabohnenöl |
| 0,1 Teilen | Magnesiumlaurat |
| 0,03 Teilen | CD 36-0020 = 30%ige Lösung von Na-Perchlorat x 1 H₂O in Butyldiglycol |

und 0,6 Teilen der in Tabelle 1 angegebenen Stabilisatoren wurden auf einem Mischwalzwerk 5 Minuten bei 180 °C gewalzt. Vom gebildeten Walzfell wurden Testfolienstreifen von 0,3 mm-Dicke entnommen. Die Folienproben wurden in einem Ofen (= Mathis-Thermo-Takter) bei 190 °C thermisch belastet. Im zeitlichen Abstand von 3 Minuten wurde der Yellowness Index (YI) nach ASTMD 1925-70 bestimmt. Die Ergebnisse sind der Tabelle 2 zu entnehmen. Geringe YI-Werte bedeuten eine gute Stabilisierung.

**Tabelle 2**

| Minuten | Stab. 1 | Stab. 2 | Stab. 3 | Stab. 4 | Stab. 5 |
|---|---|---|---|---|---|
| 0 | 54,0 | 36,6 | 12,1 | 9,4 | 9,8 |
| 3 | 70,7 | 53,5 | 14,2 | 10,7 | 14,1 |
| 6 | 80,1 | 70,1 | 19,6 | 12,9 | 14,3 |
| 9 | 104,7 | 88,9 | 28,0 | 18,1 | 19,0 |
| 12 | | 106,2 | 36,2 | 25,2 | 25,5 |
| 15 | | | 46,9 | 35,1 | 34,2 |
| 18 | | | 58,1 | 47,2 | 44,1 |
| 21 | | | 69,6 | 63,1 | 55,5 |
| 24 | | | 80,4 | 85,1 | 71,1 |
| 27 | | | 90,8 | 117,0 | 87,0 |
| 30 | | | 103,4 | | 106,5 |

Es zeigt sich, dass die Verwendung von Stab. 3, 4 und 5 eine gute stabilisierende Wirkung gegenüber Stab. 1 und 2 ergibt. Dieser Effekt war nicht vorhersehbar und deshalb überraschend.

### Beispiel 4 Statischer Hitzetest:

Analog Beispiel 1, jedoch ohne Zusatz von Magnesiumlaurat und CD 36-0020 (30%ige Lösung von Na-Perchlorat x 1 H₂O in Butyldiglycol).

Die Ergebnisse sind der Tabelle 3 zu entnehmen.

**Tabelle 3**

| Minuten | Stab. 1 | Stab. 2 | Stab. 3 | Stab. 4 | Stab. 5 | Stab. 6 | Stab. 7 | Stab. 9 | Stab. 10 | Stab. 11 |
|---|---|---|---|---|---|---|---|---|---|---|
| 0 | 79,9 | 66,8 | 19,0 | 11,6 | 12,9 | 18,3 | 14,3 | 38,1 | 16,5 | 9,8 |
| 3 | 74,9 | 72,5 | 17,1 | 12,0 | 15,5 | 28,6 | 21,4 | 36,9 | 18,9 | 12,9 |
| 6 | 86,2 | 95,7 | 20,5 | 14,1 | 17,4 | 26,9 | 21,9 | 52,6 | 27,4 | 15,9 |
| 9 | 113,3 | 126,4 | 28,5 | 20,4 | 23,0 | 35,7 | 30,1 | 73,0 | 42,3 | 20,2 |
| 12 | | | 40,9 | 30,4 | 32,1 | 49,9 | 43,1 | 96,3 | 62,3 | 23,8 |
| 15 | | | 58,1 | 46,7 | 44,5 | 70,5 | 58,4 | 123,5 | 94,1 | 28,8 |
| 18 | | | 80,1 | 75,3 | 65,6 | 94,0 | 78,5 | | 127,8 | 34,6 |
| 21 | | | 105,6 | 136,7 | 95,2 | 125,3 | 107,7 | | | 43,7 |
| 24 | | | | | | | | | | 57,1 |
| 27 | | | | | | | | | | 82,2 |

Es zeigt sich, dass die Verwendung von Stab. 3 - 7, 10 und 11 eine gute stabilisierende Wirkung gegenüber Stab. 1, 2 und 9 haben. Dieser Effekt war nicht vorhersehbar und damit überraschend.

## Patentansprüche

1. Zusammensetzung enthaltend ein chlorhaltiges Polymer und mindestens ein monosubstituiertes 6-Aminouracil der Formel I 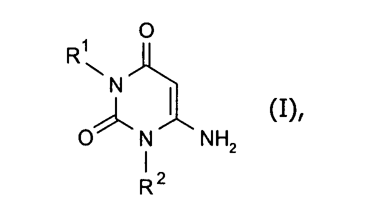 wobei
R¹ oder R² lineares oder verzweigtes C₃-C₂₂-Alkyl-, unsubstituiertes oder durch C₁-C₄-Alkyl/Alkoxy- und/oder Hydroxy substituiertes Phenyl, unsubstituiertes oder durch C₁-C₄-Alkyl/Alkoxy- und/oder Hydroxy substituiertes Phenyl-C₁-C₄- Alkyl, lineares oder verzweigtes C₃-C₁₈-Alkenyl, C₃-C₈-Cycloalkyl,
durch mindestens 1 Sauerstoffatom unterbrochenes C₃-C₁₀-Alkyl oder C₃-C₁₀-Hydroxyalkyl oder Acetoxy/Benzoyloxy-C₂-C₁₀-Alkyl bedeutet und R¹ oder R² Wasserstoff ist.

2. Zusammensetzung gemäss Anspruch **1,** wobei R¹ oder R² Phenyl, C₁-C₄-Alkylphenyl, Benzyl, 2-Phenethyl, Allyl oder durch Sauerstoffatom unterbrochenes C₃-C₁₀-Alkyl ist.

3. Zusammensetzung gemäss Anspruch **1,** wobei R¹ oder R² C₃-C₁₂-Alkyl oder C₅-C₆-cycloalkyl ist.

4. Zusammensetzung gemäss Anspruch **3,** wobei R¹ oder R² C₃-C₈-Alkyl oder Cyclohexyl ist.

5. Zusammensetzung gemäss einem der Ansprüche **1 - 4** enthaltend eine Verbindung der Formel I und zusätzlich mindestens eine Pyrrolverbindung oder ein disubstituiertes Aminouracil analog der Formel I mit gleichen Definitionen für die Reste R¹ und R², wobei R¹ und R² jeweils nicht für Sauerstoff steht.

6. Zusammensetzung gemäss einem der Ansprüche **1 - 5** enthaltend weiterhin mindestens einen epoxidierten Fettsäureester.

7. Zusammensetzung gemäss einem der Ansprüche **1 - 5** enthaltend weiterhin mindestens ein Zink- und/oder Alkali- und/oder Erdalkalicarboxylat oder Aluminiumcarboxylat.

8. Zusammensetzung gemäss einem der Ansprüche **1 - 5** enthaltend weiterhin mindestens einen weiteren Stoff aus den Gruppen der Phosphite, Antioxidantien, beta-Dicarbonylverbindungen oder deren Calcium-, Magnesium- oder Zinksalz , Weichmacher, Füllstoffe, Gleitmittel oder Pigmente.

9. Zusammensetzung gemäss einem der Ansprüche **1 - 8** enthaltend Kreide als Füllstoff.

10. Zusammensetzung gemäss einem der Ansprüche **1 - 5** enthaltend Calciumstearat oder Magnesiumlaurat bzw. -stearat als weiteres Additiv.

11. Zusammensetzung gemäss einem der Ansprüche **1 - 5** enthaltend Titandioxid und/oder Zirkonoxid und/oder Bariumsulfat als Pigment.

12. Zusammensetzung gemäss einem der Ansprüche **1 - 5** enthaltend weiterhin mindestens ein Polyol und/oder einen Disaccharidalkohol und/oder einen Trishydroxyalkyl-iso-cyanuratester.

13. Zusammensetzung gemäss einem der Ansprüche **1 - 5** enthaltend weiterhin mindestens eine Glycidylverbindung.

14. Zusammensetzung gemäss einem der Ansprüche **1 - 5** enthaltend weiterhin mindestens eine Zeolithverbindung insbesondere einen Na-A bzw. einen Na-P-Zeolith geringer Partikelgröße.

15. Zusammensetzung gemäss einem der Ansprüche **1 - 5** enthaltend weiterhin mindestens eine Schichtgitterverbindung (Hydrotalcite).

16. Zusammensetzung gemäß Anspruch **14** oder **15** enthaltend weiterhin mindestens eine Perchloratverbindung.

17. Zusammensetzung gemäß einem der Ansprüche **1 - 13** enthaltend weiterhin mindestens eine Perchloratverbindung.

18. Zusammensetzung gemäss Anspruch **1** enthaltend als chlorhaltiges Polymer ein Recyclat mit mindestens 1 Gewichtsprozent recycliertem Polymer.

19. Verfahren zur Stabilisierung chlorhaltiger Polymere, **dadurch gekennzeichnet, dass** man mindestens eine Verbindung der Formel I gemäss Anspruch **1** in das chlorhaltige Polymer einarbeitet.

20. Verwendung der Verbindungen der allgemeinen Formel I gemäss Anspruch **1** zur Stabilisation von halogenhaltigen Polymeren.

21. Verwendung der Verbindungen der allgemeinen Formel I gemäss Anspruch **1** zur Stabilisierung von recyclierten halogenhaltigen Polymeren.

22. Monosubstituierte oder disubstituierte 6-Aminouracile der Formel II 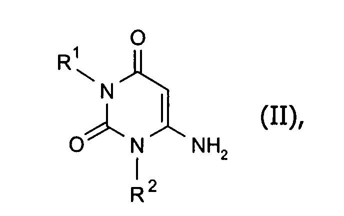 wobei
R¹ oder R² C₃-C₈-Cycloalkyl, C₄-C₁₀-Hydroxyalkyl oder Acetoxy/Benzoyloxy-C₂-C₁₀-Alkyl und R¹ oder R² gleich Wasserstoff bedeutet.

23. Verbindungen nach Anspruch **22**, wobei R¹ oder R² C₅ oder C₆-Cycloalkyl bedeutet.
